Europäisches Patentamt

European Patent Office

Office européen des brevets

(11) Veröffentlichungsnummer: **0 487 965 A1**

(12) **EUROPÄISCHE PATENTANMELDUNG**

(21) Anmeldenummer: **91119204.5**

(22) Anmeldetag: **12.11.91**

(51) Int. Cl.⁵: **F16B 5/12**

(30) Priorität: **30.11.90 DE 4038159**

(43) Veröffentlichungstag der Anmeldung:
**03.06.92 Patentblatt 92/23**

(84) Benannte Vertragsstaaten:
**BE DE ES FR GB IT NL SE**

(71) Anmelder: **A. Raymond & Cie**
**113, Cours Berriat**
**F-38028 Grenoble(FR)**

(72) Erfinder: **Boville, Daniel**
**45, rue des Prairies**
**F-75020 Paris(FR)**

(74) Vertreter: **Kirchgaesser, Johannes, Dipl.-Ing.**
**p/a Fa. A. RAYMOND KG, Teichstrasse 57**
**W-7850 Lörrach(DE)**

(54) **Zweiteiliger Halteclip zur Befestigung von Schutz- oder Zierleisten.**

㉗ Der zweiteilige Halteclip dient zur Befestigung von Schutz- oder Zierleisten an Karosseriewänden von Kraftfahrzeugen. Der Clip besteht aus einem im Karosserieblech (4) verankerbaren Unterteil (1) und einem die Zierleiste (5) haltenden Oberteil (2), wobei das Unterteil (1) mit einem nach oben abstehenden Steckbolzen (10) in eine entsprechende Bolzenaufnahme am Oberteil (2) druckknopfartig einsetzbar ist.

Um den Clip leicht demontieren und wieder montieren zu können, ohne die Karosserie oder die Zierleiste zu beschädigen, ist im Bereich der Bolzenaufnahme eine dem Steckbolzen (10) angepaßte, durchgehende Aussparung (16) vorgesehen. Außerdem sind an den Seitenwänden (15) des Oberteils (2) schräg nach innen aufragende, elastisch auffederbare Stützlappen (17) angeformt. Der im Querschnitt rechteckig ausgebildete Steckbolzen (10) besitzt an den in Achsrichtung der Zierleiste (5) verlaufenden Längsseiten seitlich abstehende Stützschenkel (11) und an den beiden Querseiten schräge Gleitflächen (13), die bis unter das Niveau der Stützschenkel (11) heruntergeführt sind.

Die Stützschenkel (11) werden durch einen von oben in die Aussparung (16) einsetzbaren Deckel (22) auf die Stützlappen (17) angedrückt. Dadurch läßt sich das Oberteil (2) unter elastischem Nachgeben der Stützlappen (17) über die Gleitflächen (13) in Achsrichtung der Zierleiste (5) verschieben, während das Unterteil (1) an seinem Platz an der Karosserie verankert bleibt.

FIG.5

Rank Xerox (UK) Business Services

Die Erfindung geht aus von einem zweiteiligen Halteclip gemäß der im Oberbegriff des Anspruchs 1 angegebenen Art. Ein solcher Halteclip ist im Prinzip beispielsweise bekannt durch die DE 30 29 845 C2. Der dort dargestellte Clip ist zwar nicht zur Befestigung von Schutz- oder Zierleisten, sondern zur Halterung einer Verkleidungsplatte an einer Trägerplatte bestimmt, doch ist dieser Clip mit dem der Erfindung zugrundegelegten und in der Praxis bereits verwendeten Clip hinsichtlich der Verankerung des Unterteils auf der Trägerplatte und der druckknopfartigen Verbindung zwischen Unterteil und Oberteil durchaus vergleichbar.

Dieser zweiteilige Halteclip wird üblicherweise im zusammengefügten Zustand angeliefert und entsprechend den vorgesehenen Befestigungslöchern in der Zierleiste positionsgenau eingesetzt, so daß die Unterteile der Halteclipse beim Andrükken der Zierleiste an die Karosserie, bzw. an die Türaußenwand direkt in die Befestigungslöcher eindringen können und dort unlösbar verankert werden. Soll die Zierleiste später einmal wegen Beschädigung ersetzt oder aus anderen Gründen vorübergehend entfernt werden, so lassen sich die Kopfbolzen mit entsprechendem Kraftaufwand aus der Bolzenaufnahme unter elastischer Aufweitung des Klemmverschlusses herausziehen oder mit einem geeigneten Werkzeug heraushebeln.

Hierbei verbleiben zwar die Unterteile in ihrer Verankerung und können auch beim Anbringen einer neuen Zierleiste wiederverwendet werden. Jedoch wird die Zierleiste, sofern diese nicht schon beschädigt war, durch das gewaltsame Entfernen derart in Mitleidenschaft gezogen, daß sie durch eine neue Zierleiste ersetzt werden muß. Auch ist beim Ansetzen des Demontagewerkzeuges mit der Bildung von Dellen in der Karosseriewand zu rechnen, so daß nach dem Auswechseln einer Zierleiste möglicherweise noch Spuren auf der Karosseriewand zu beseitigen sind.

Aufgabe der Erfindung ist es daher, den eingangs beschriebenen Halteclip so zu gestalten, daß neben einer einfachen Montage auch eine problemlose, die Zierleiste wie auch die Karosseriewand schonende Demontage ermöglicht wird, so daß die demontierten Teile ohne weiteres wieder verwendet werden können.

Diese Aufgabe wird bei dem gattungsgemäßen Halteclip zur Befestigung von Schutz- oder Zierleisten durch die im Anspruch 1 angegebenen Gestaltungsmerkmale gelöst.

Aufgrund der erfindungsgemäßen Ausbildung des Halteclips ist es nun möglich, die senkrecht auf das Karosserieblech aufgedrückte Zierleiste durch seitliches Verschieben lackschonend zu demontieren, wobei das Oberteil in der Zierleiste und das Unterteil in dem Befestigungsloch des Karosseriebleches verbleiben. Sofern die Zierleiste nicht durch andere äußere Gewalteinflüsse beschädigt worden ist, kann sie ohne weiteres wieder montiert werden, wobei dieses Mal das Oberteil auf das Unterteil geclipst wird.

In den Unteransprüchen sind noch weitere Maßnahmen und Merkmale angegeben, welche für den angestrebten Erfolg förderlich sind. Hierbei ist im Anspruch 2 eine Ausführungsform beschrieben, bei welcher die Zierleiste an ihrer Innenseite mit Ansätzen versehen ist, welche die Funktion der auf den Bolzenkopf drückenden Stempel übernehmen. Bei der bevorzugten Ausführungsform nach Anspruch 3 dagegen sind diese Stempel im Halteclip integriert und als in die Aussparungen einschwenkbare und einrastbare Deckel ausgebildet.

Hierdurch kann bei der Herstellung der Zierleisten auf die nach Anspruch 2 erforderlichen Ansätze verzichtet werden, so daß in diesem Fall lediglich die zur Aufnahme der Halteclipse erforderlichen Nischen, bzw. Rastkanten vorzusehen sind, was insbesondere bei Verwendung von metallischen Zierleisten von Vorteil ist.

In der Zeichnung sind drei Ausführungsbeispiele der Erfindung dargestellt und sollen nachfolgend näher erläutert werden. Es zeigt

| | |
|---|---|
| Fig. 1 | einen zweiteiligen Halteclip in Vorderansicht, |
| Fig. 2 | den gleichen Halteclip in Seitenansicht mit Schnitt durch das Oberteil, |
| Fig. 3 | den Halteclip mit im Querschnitt dargestellter Zierleiste vor dem Zusammenfügen, |
| Fig. 4 | die mit dem Halteclip zusammengefügte Zierleiste vor der Montage auf dem Karosserieblech, |
| Fig. 5 | die mit dem Halteclip zusammengefügte Zierleiste nach der Montage auf dem Karosserieblech, |
| Fig. 6 | die fertig montierte Zierleiste nach Figur 5 im Längsschnitt mit Seitenansicht des Unterteils, |
| Fig. 7 | den gleichen Längsschnitt bei seitlich herausgezogener Zierleiste, |
| Fig. 8 | die Zierleiste mit dem verbliebenen Oberteil des Halteclips im Teilschnitt vor der erneuten Montage auf dem Unterteil, |
| Fig. 9 | das gleiche Bild kurz vor dem Einrasten der Stützlappen unter den Stützflächen des Bolzenkopfes, |
| Fig. 10 | eine andere Ausführungsform des Halteclips mit einschwenkbarem Deckel in Vorderansicht, |
| Fig. 11 | den gleichen Halteclip in Seitenansicht mit Schnitt durch das Oberteil, |
| Fig. 12 | den gleichen Halteclip in Draufsicht, |
| Fig. 13 | den gleichen Halteclip mit eingeschwenktem Deckel mit Teilschnitt |

durch die Bolzenaufnahme und strichpunktiert angedeuteter Zierleiste,

Fig. 14 den gleichen geschlossenen Halteclip in Seitenansicht mit Schnitt durch das Oberteil,

Fig. 15 eine weitere Ausführungsform des zweiteiligen Halteclips in Vorderansicht,

Fig. 16 den gleichen Halteclip in Seitenansicht mit Schnitt durch das Oberteil,

Fig. 17 den gleichen Halteclip in Draufsicht,

Fig. 18 den zugehörigen Deckel,

Fig. 19 den Halteclip beim Einschwenken des Deckels und

Fig. 20 den Halteclip mit eingeschwenktem Deckel nach der Montage auf dem Karosserieblech.

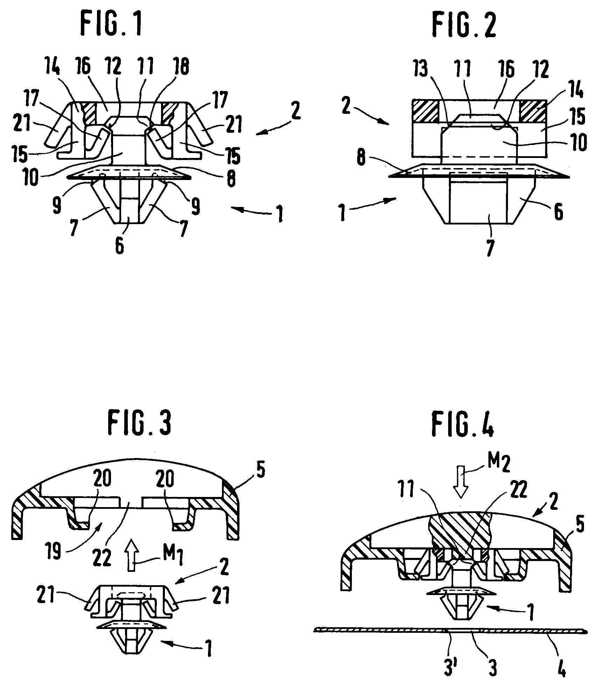

Der in den Figuren 1 bis 9 dargestellte Halteclip ist aus hartelastischem Kunststoff hergestellt und dient zur Befestigung von Schutz- oder Zierleisten an Karosseriewänden von Kraftfahrzeugen. Der Clip besteht im wesentlichen aus einem im Loch 3 des Karosseriebleches 4 verankerbaren Unterteil 1 und einem in die Zierleiste 5 einsetzbaren Oberteil 2, welches mit dem Unterteil 1 druckknopfartig verbindbar ist.

Zur Verankerung des Clips im Karosserieblech 4 ist das Unterteil 1 mit einem in das Befestigungsloch 3 einführbaren, im Querschnitt rechteckig ausgebildeten Schaft 6 versehen, an dessen unterem Bereich zwei V-förmig nach oben strebende, sich am Lochrand 3' abstützende Spreizlappen 7 und an dessen oberen Bereich ein das Befestigungsloch 3 überdeckender Dichtschirm 8 angeformt sind.

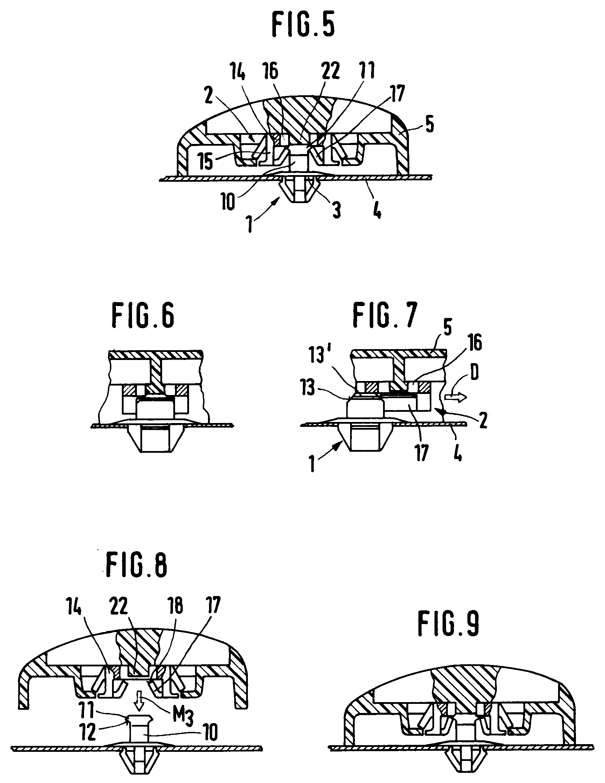

Beim Eindrücken des Schaftes 6 in das Loch 3 weichen die Spreizlappen 7 zunächst nach innen aus und federn, sobald diese am Lochrand 3' vorbei sind, wieder in ihre Ursprungslage zurück, wobei die Oberkanten 9 der Spreizlappen 7 sich von unten gegen den Lochrand 3' abstützen, während der Dichtschirm 8 gleichzeitig elastisch etwas flachgedrückt wird und damit den zur Verankerung erforderlichen Gegendruck erzeugt (Fig. 5).

Oberhalb des Dichtschirms 8 schließt sich ein im Querschnitt ebenfalls rechteckig ausgebildeter Steckbolzen 10 an, wobei an den in Achsrichtung der Zierleisten verlaufenden Längsseiten seitlich abstehende Stützschenkel 11 mit nach unten gerichteten Auflageflächen 12 angeformt sind.

Der Steckbolzen 10 ist ferner an den beiden Querseiten mit dachförmigen Gleitflächen 13 versehen, die bis unter das Niveau der Stützflächen 12 heruntergeführt sind.

Das Oberteil 2 besteht aus einem in seinem Querschnitt U-förmig ausgebildeten Grundkörper mit einem obenliegenden Querhaupt 14 und zwei zum Unterteil 1 hin gerichteten Seitenwänden 15. Im Querhaupt 14 befindet sich eine dem Steckbolzen 10 mit seinen Stützschenkeln 11 angepaßte, rechteckige Aussparung 16, während am unteren Ende der beiden Seitenwände 15 schräg nach innen aufragende, elastisch auffederbare Stützlappen 17 angeformt sind, welche mit ihren obenliegenden Stützkanten 18 dicht unterhalb des Querhauptes 14 enden und parallel zur Achsrichtung der Zierleiste 5 verlaufen.

Die in den Fig. 3 - 9 dargestellte Zierleiste 5 weist an ihrer Unterseite eine Aufnahmenische 19 mit zwei seitlichen Rastkanten 20 auf, die mit zwei am Querhaupt 14 des Oberteils 2 angeformten, nach außen abstehenden Spreizbeinen 21 derart zusammenwirken, daß diese beim Eindrücken des Oberteils 2 in Richtung des Pfeiles M1 hinter den Rastkanten 20 der Nische 19 fest verankert werden (Fig. 3).

Innerhalb der Aufnahmenische 19 ist an der Zierleiste 5 ferner ein Ansatz 22 angeformt, der beim Eindrücken des Oberteils 2 in die Nische 19 genau in die Aussparung 16 eintaucht und dabei die seitlich abstehenden Stützschenkel 11 auf die Stützkanten 18 der Stützlappen 17 andrückt (Fig. 4).

Nun können durch Andrücken der Zierleiste 5 in Richtung des Pfeiles M2 (Fig. 4) die positionsgenau eingesetzten Halteclipse in den Befestigungslöchern 3 des Karosseriebleches 4 verankert werden (Fig. 5).

Die Demontage der Zierleiste 5 erfolgt, wie aus Fig. 6 und 7 ersichtlich, durch seitliche Verschiebung in Richtung des Pfeiles "D". Hierbei gleitet das Oberteil 2 unter elastischem Nachgeben der Stützlappen 17 über die Gleitfläche 13 und die Dachfläche 13' des Steckbolzens 10, bis die oberen Stützkanten 18 der Stützlappen 17 unter den Auflageflächen 12 der Stützschenkel 11 hindurch sind. Nun kann die Zierleiste 5 zusammen mit den Oberteilen 2 der Halteclipse mühelos vom Karosserieblech entfernt werden, während die Unterteile 1 im Karosserieblech 4 in den Löchern 3 verankert bleiben.

Bei der erneuten Montage der Zierleiste 5 wird diese, wie aus Figur 8 ersichtlich, mit den verbliebenen Oberteilen 2 in Richtung des Pfeiles M3 an das Karosserieblech 4 angedrückt, wobei die Stützlappen 17 der Oberteile 2 unter elastischer Aufweitung an den abgeschrägten Oberkanten der Stützschenkel 11 vorbeigleiten. Sobald die Stützkanten 18 die Auflageflächen 12 passiert haben (Fig. 9), federn die Stützlappen 17 wieder in ihre Ausgangslage zurück und schieben sich mit ihren Stützkanten 18 bündig unter die Auflageflächen 12 der Stützschenkel 11 (Fig. 5). Zu diesem Zweck sind die Auflageflächen 12 sowie die Stützkanten 18 so ausgerichtet, daß diese mit den Stützlappen 17

einen rechten Winkel bilden.

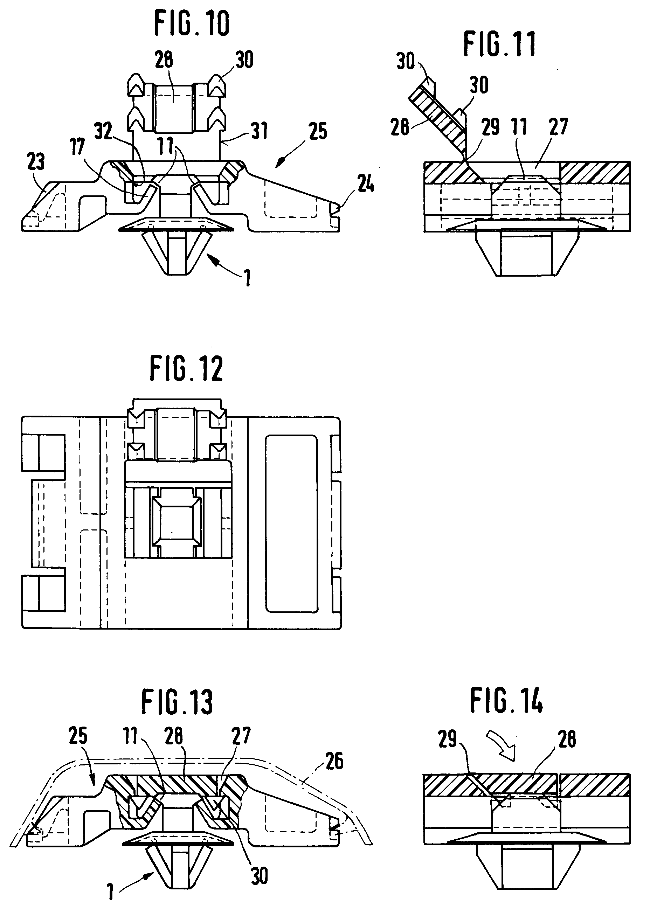

Der in den Figuren 10 bis 14 dargestellte Halteclip ist im Prinzip genauso aufgebaut wie der bereits beschriebene Halteclip, wobei die Halteelemente 23 und 24 am Oberteil 25 entsprechend der Form der Zierleiste 26 etwas anders gestaltet sind.

Der wesentliche Unterschied besteht darin, daß am oberen Querrand der Aussparung 27 ein Deckel 28 mit einem Filmscharnier 29 angeformt ist, welcher zum Andrücken der Stützschenkel 11 auf die Stützlappen 17 in die Aussparung 27 einschwenkbar ist.

Der Deckel 28 ist an seinen Längskanten 31 mit seitlich vorstehenden Rastnasen 30 versehen, welche im eingeschwenkten Zustand des Deckels 28 am unteren Längsrand 32 der Aussparung 27 einrasten (Fig. 13 u. 14).

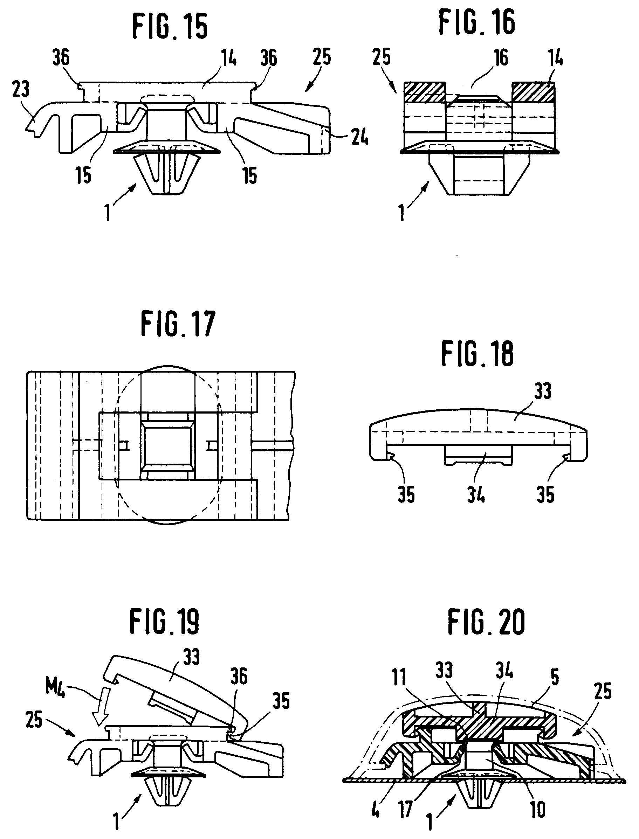

In den Figuren 15 bis 18 ist eine weitere Ausführungsform des zweiteiligen Halteclips dargestellt, welche an Stelle des schwenkbaren Deckels 28 bei der vorher beschriebenen Ausführungsform gemäß Fig. 10 bis 14 einen separaten Deckel 33 aufweist (Fig. 18). Dieser Deckel 33 besitzt in seiner Mitte einen der Aussparung 16 angepaßten Ansatz 34 und ist an zwei gegenüberliegenden Seiten mit Rastnasen 35 versehen, während am Querhaupt 14 des Oberteils 25 an den in Achsrichtung der Zierleisten 5 verlaufenden Seiten den Rastnasen 35 entsprechende Rastkanten 36 angeformt sind.

Der Deckel 33 wird, wie in Figur 19 gezeigt, an einer Seite mit seinen Rastnasen 35 unter die Rastkante 36 gesetzt und dann mit der anderen Seite in Richtung des Pfeiles M4 nach unten geschwenkt, bis die Rastnasen 35 unter der Rastkante 36 einrasten. Der Ansatz 34 drückt nun von oben auf den Steckbolzen 10, so daß die Stützschenkel 11 des Unterteils 1 auf den Stützlappen 17 des Oberteils 25 bündig aufliegen (Fig.20).

**Patentansprüche**

1. Zweiteiliger Halteclip zur Befestigung von Schutz- oder Zierleisten an Karosseriewänden von Kraftfahrzeugen, bestehend aus einem im Karosserieblech (4) verankerbaren Unterteil (1) und einem die Zierleiste (5) haltenden Oberteil (2), wobei das Unterteil (1) mit einem nach oben abstehenden Steckbolzen (10) in eine entsprechende Bolzenaufnahme am Oberteil (2) druckknopfartig einsetzbar ist, **dadurch gekennzeichnet,** daß das Oberteil (2) im Bereich der Bolzenaufnahme aus einem Querhaupt (14) und zwei Seitenwänden (15) gebildet ist, wobei im oberen Querhaupt (14) eine dem Steckbolzen (10) angepaßte, durchgehende Aussparung (16) vorgesehen ist und am unteren Ende der beiden Seitenwände (15) schräg nach innen aufragende, elastisch auffederbare Stützlappen (17) angeformt sind, welche mit ihren obenliegenden Stützkanten (18) dicht unterhalb des Querhauptes (14) enden,
   daß der Steckbolzen (10) im Querschnitt rechteckig ausgebildet ist, wobei an den in Achsrichtung der Zierleiste (5) verlaufenden Längsseiten seitlich abstehende Stützschenkel (11) mit nach unten gerichteten Auflageflächen (12) angeformt sind, während an den beiden Querseiten schräge Gleitflächen (13) vorgesehen sind, die bis unter das Niveau der Auflageflächen (12) heruntergeführt sind, und
   daß die Stützschenkel (11) mit ihren seitlich abstehenden Auflageflächen (12) durch einen von oben in die Aussparung (16) einsetzbaren Deckel (22, 28, 33) auf die Stützkanten (18) der Stützlappen (17) andrückbar sind, und zwar derart, daß das Oberteil (2) unter elastischem Nachgeben der Stützlappen (17) unterhalb des Querhauptes (14) über die Gleitflächen (13) in Achsrichtung der Zierleiste (5) verschiebbar ist.

2. Halteclip nach Anspruch 1, dadurch gekennzeichnet, daß der Deckel (22) an der Unterseite der Zierleiste (5) im Haltebereich (19) fest angeformt ist.

3. Halteclip nach Anspruch 1, dadurch gekennzeichnet, daß der Deckel (28) am oberen Querrand der Aussparung (27) mit einem Filmscharnier (29) schwenkbar angeformt und an seinen Längskanten (31) mit seitlich vorstehenden Rastnasen (30) versehen ist, welche im eingeschwenkten Zustand des Deckels (28) am unteren Längsrand (32) der Aussparung (27) einrasten.

4. Haltclip nach einem der Ansprüche 1 bis 3, dadurch gekennzeichnet, daß die Auflagenflächen (12) sowie die Stützkanten (18) mit den Stützlappen (17) einen rechten Winkel bilden.

# FIG.1

# FIG.2

# FIG.3

# FIG.4

FIG.5

FIG.6

FIG.7

FIG.8

FIG.9

# FIG.10

# FIG.11

# FIG.12

# FIG.13

# FIG.14

**FIG. 15**

**FIG. 16**

**FIG. 17**

**FIG. 18**

**FIG. 19**

**FIG. 20**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 622 258 (I.T.W. DE FRANCE) <br> * Seite 7, Zeile 1 - Seite 14, Zeile 10; Abbildungen * <br> --- | 1 | F16B5/12 |
| A | FR-A-2 138 516 (LA DAUPHINOISE) <br> * das ganze Dokument * <br> --- | 1 | |
| D,A | DE-A-3 029 845 (UNITED-CARR GMBH) <br><br> ----- | | |
| | | | **RECHERCHIERTE SACHGEBIETE (Int. Cl.5)** |
| | | | F16B <br> B60R |

Der vorliegende Recherchenbericht wurde für alle Patentansprüche erstellt

| Recherchenort | Abschlußdatum der Recherche | Prüfer |
|---|---|---|
| DEN HAAG | 24 MAERZ 1992 | ARESO Y SALINAS |